# EUROPEAN PATENT SPECIFICATION

(11) **EP 1 456 056 B1**
(45) Date of publication and mention of the grant of the patent: **05.01.2011**
(21) Application number: 02788955.9
(22) Date of filing: 14.11.2002
(51) Int. Cl.: B60N 3/04, B60R 7/04

(54) **Car floor mat**
Fahrzeug-Bodenmatte
Tapis de sol de véhicule

(30) Priority: 16.11.2001 KR 2001035241 U
(43) Date of publication of application: 15.09.2004
(73) Proprietor: Kim, Hyuk Jong, Seoul, 138-160 (KR)
(72) Inventor: Kim, Hyuk Jong, Seoul, 138-160 (KR)
(74) Representative: Mounteney, Simon James
(86) International application number: PCT/KR2002/002127
(87) International publication number: WO 2003/041994

(56) References cited:
- DE-A1- 4 125 416
- JP-A- 1 172 040
- JP-A- 3 074 228
- JP-A- 4 050 035
- JP-A- 5 278 512
- JP-A- 7 061 275

## Description

The invention relates generally to a car mat which is contrived to make the rider to get on the car more comfortably by taking off his shoes.

Firstly, the conventional usual car mat KR 20-0189478 Y1 (utility model, application No. KR 20-1999-0026526) can be described as follows.

In order to prevent the bottom of the car from being contaminated by a driver or the passengers, it has various appearance. It consists of the landing part which is made of textile materials on the upper side of it and the fixing part which is made of lava and synthetic resin. The above mentioned car mat has a hook and loop fastener (Velcro) to connect with the landing part and the fixing part on the edge in where the two parts meet. And, the filtering net whose meshes are fine is tied up, its size being smaller than that of the inside of the hook and loop fastener. Because of this, it has the problem that there occur bad smells even though he took off his shoes, so that the rider can not drive comfortably.

The characteristics of the utility model KR 20-025 9387 Y1 (application No. KR 20-2001-29073) which I had already applied to solve the problems of the conventional car mat can be described as follows: it has the mat (100) which has a drawer unit (20) which has several partitions (21) to keep shoes and a lid (22) to open and close the drawer unit at one side on the upper side of the above mentioned body (10) and a foot rest (30) that can be assembled and on which the rider can put his feet on the upper side of the body (10).

However the above mentioned conventional invention has the drawer unit and the foot rest on the upper side of the body together. In this way, there are some inconveniences as follows: the side of the above mentioned foot rest is caught with the drawer unit, when the rider have to move the above mentioned drawer unit to put the shoes in the above mentioned drawer unit; the drawer unit and the foot rest are disentangled by vibration or impact in the car; bad smells take place due to the shoes kept in the above mentioned drawer unit.

JP 07-61275A discloses a car mat with a projecting rectangular wall for the storage of articles like footwear.

The present invention is a car mat as defined in Claim 1.

The present invention is contrived to make the rider get on the car more comfortably by taking off his shoes.

The conventional car mat consists of: 1) a body that has the width corresponding to the bottom of car, 2) a drawer unit which has several partitions to keep shoes and a lid to open and close the drawer unit at one side on the upper side of the above mentioned body, 3) a foot rest that can be assembled. The car mat of the present invention allows the user to move and position freely the drawer unit and the foot rest on the upper side of the base, in order to avoid bad smells.

### BRIEF DESCRIPTION OF THE DRAWINGS

The aforementioned aspects and other features of the present invention will be explained in the following description of a preferred embodiment of the invention, taken in conjunction with the accompanying drawings, wherein:
Fig. 1 is the perspective view of the car mat according to the present embodiment;
Fig. 2 is the exploded perspective view of the car mat of Figure 1;
Fig. 3 is the plan view showing selected important parts of the car mat of
Figure 1;

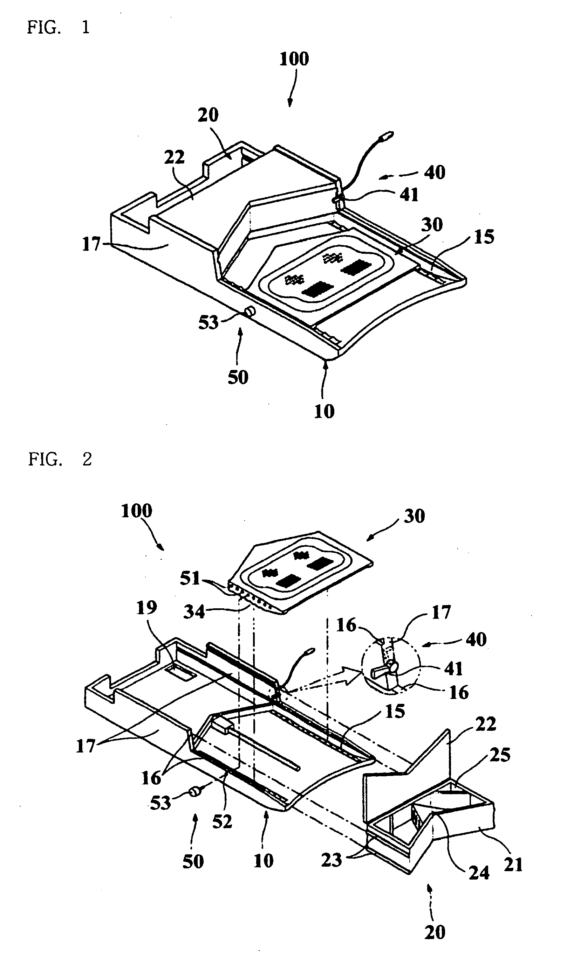

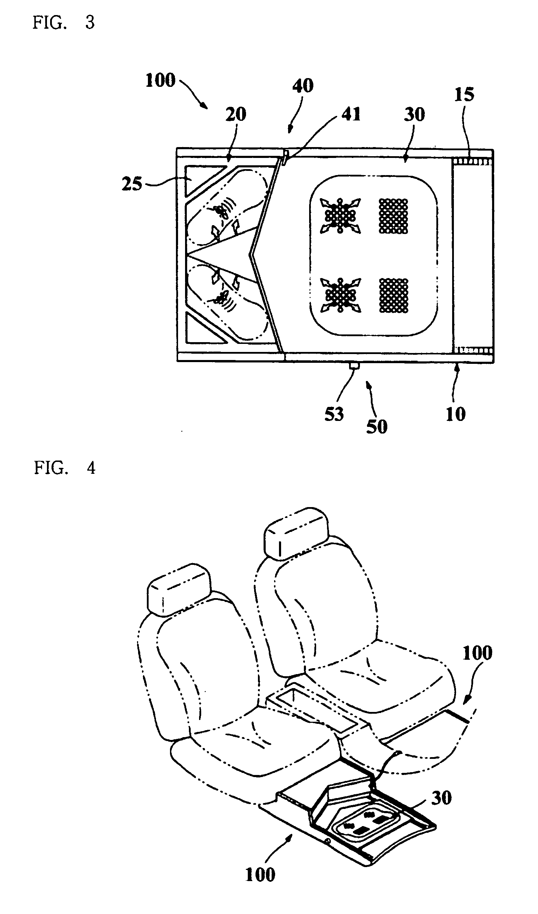

Fig. 4 shows the car mat of Figure 1 in use; and

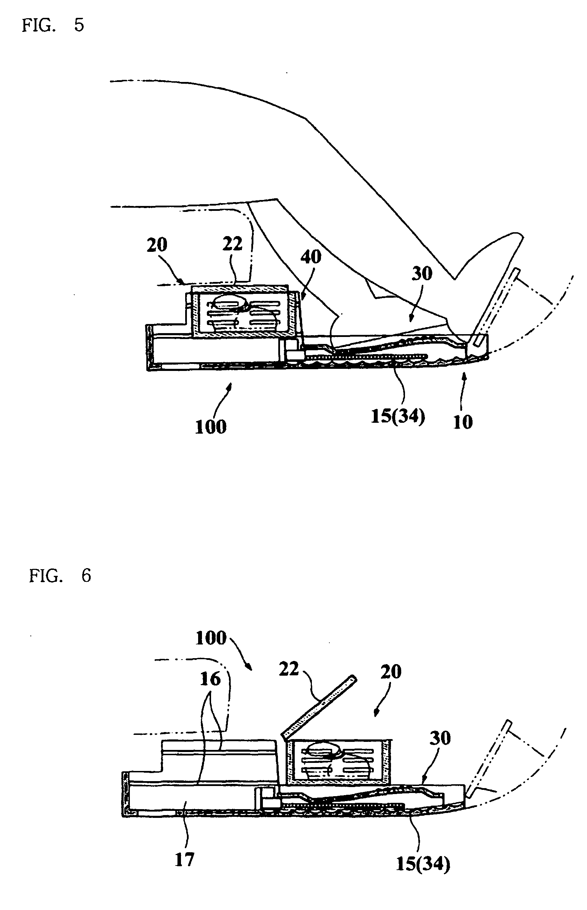

Figs. 5 and 6 are longitudinal sections through the car mat of Figure 1, showing selected important parts, which shows the features of the car mat in use, with the drawer unit at the rear for storage and at the front for access.

The present invention will be described in detail by way of a preferred embodiment with reference to accompanying drawings.

The invention is a car mat which is contrived to make the rider to get on the car more comfortably by taking off his shoes.

Therefore, the objective of the present invention is to ensure the free moving and fixing of the drawer unit which isarranged on the upper side of the body, and to remove the bad smells from the drawer unit by fixing the above drawer unit and foot rest.

In accordance with the desired execution example of the present invention, the car mat can be described by 'Fig. 1' and 'Fig. 2' as follows. The conventional mat has the following structural features; 1) a body (10) that has a width corresponding to the floor of a car, 2) a drawer unit (20) which has several partitions (21) to keep shoes and a lid (22) to open and close the drawer unit at one side on the upper side of the above mentioned body (10), and 3) a foot rest (30) that can be assembled. The mat (100) includes all the features mentioned above.

However, this embodiment has the characteristics in structure as follows: the walls (17) that support the foot rest (30) and the drawer unit (20) at both sides of the above mentioned body (10); the fixing part (15) that supports and settles the above mentioned foot rest (30) on the upper side of the body (10); the fixed counterpart (34) beneath the foot rest (30) which is corresponding to the above fixing part; the groove (16) to move the above mentioned drawer unit (20) freely to the upper side of the settled foot rest (30) inside the wall (17) of the body (10); and the projecting longitudinal guide (23) which is corresponding to the above mentioned groove (16) at both sides of the above mentioned drawer unit (20).

The above mentioned drawer unit (20) and the foot rest (30) have the structure that can keep their fixed states in spite of the vibrations and impacts that come from the car. This structure is described as follows: the fixing instrument (50) of the foot rest and the fixing instrument (40) of the drawer unit were added at the above mentioned foot rest (30) and drawer unit (20), that can fix and support them at the drawer unit (20) and the body (10); the above mentioned fixing instrument (50) of the foot rest includes the fixing hole (51) which is drilled at a regular distance on a side of the foot rest (30), the fixing pin (53) which penetrates a fixing hole (51) and the penetrating hole (52) so as to fix the foot rest (30), and the penetrating hole (52) that is drilled to correspond to the one of the fixing holes (51) on an inside surface of the body (10); at the above mentioned fixing instrument (40) of the drawer unit, the fixing lever is added so that it can fix and support a side of the drawer unit (20) by its rotation; the instruments to fix the foot rest (50) and the instruments (40) to fix the drawer unit can be made in various forms in the range of the present invention's idea, such as various physical switches and break structures; a structure added to remove bad smells in the drawer unit (20), which includes the auxiliary drawer unit or drawer insert (25) that divides the space of drawer unit into several zones and is able to arrange goods, and the perfuming and disinfecting unit (24) which is operated by the source of electricity of the car to remove the bad smells of shoes which are kept in the drawer unit; an operating hole (19) is added at the bottom surface of the body (10), which is drilled on a side of driver's seat for a trunk lever and a petrol cap lever.

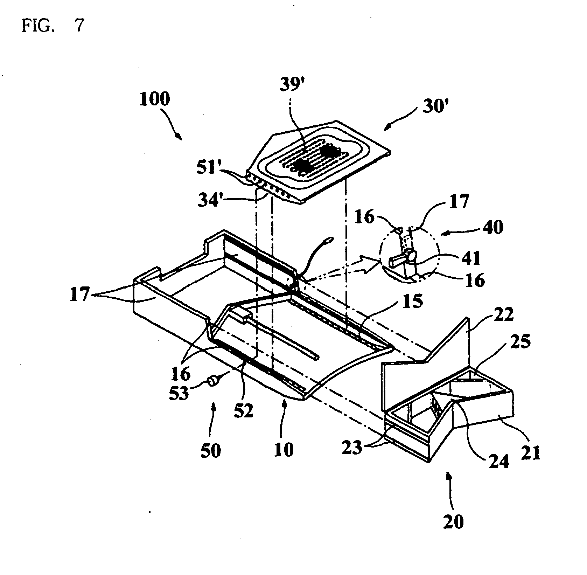

With the other execution example by Fig. 7, the present embodiment is described as follows; a structure to raise the temperature of feet in the winter with taken off shoes is added to the upper inside of the foot rest (30'). This structure's characteristic is that it has a heating wire (39') to generate heat to the user's foot with taken off shoes in the upper inside of the foot rest (30'), which heating wire is operated selectively from a source of electricity of the car. Although the lid (22) of drawer unit (20) is not shown in this figure, its opening structure can be opened forwards or by a sliding structure, within the technical idea of the present invention.

The method of use and operating process of the present embodiment are described by Fig- 3, 4, 5, and 6, as follows: the foot rest (30) is fixed on the upper side of the body (10). At this time, the fixed counterpart (34) of the foot rest (30) and the fixed part (15) of the body (10) support each other and are fixed by the instrument (50) to fix the foot rest; the instrument (50) to fix the foot rest can be fixed by the fixing pin (53) at the various positions of the respective fixing holes (51) of the foot rest (30), which is placed at the penetrating hole (52) of the body (10) according to the corresponding length of the user's lower body; the drawer unit (20) is supported and moved by fixing the projecting longitudinal guide (23) of the drawer unit (20) into the groove (16) of the body (10); the user can open easily the lid of the drawer unit (20) by the fixing lever (41) which is the instrument to fix the drawer unit, moving the drawer unit (20) to the one upper side of the body (10); the auxiliary drawer unit (25), which is devised inside of the drawer unit (20), can contain various goods, and its inside is kept always clean by the perfuming and disinfecting unit (24) which gets the source of electricity and is connected to the cigar socket of the car; the heating wire (39') of the foot rest (30') in the other embodiment keeps the temperature of the user's feet by selective connection to the source of electricity.

The function of the present invention is described as follows: the foot rest (30) is fixed on the upper side of the body (10) so that it supports the user's feet; the drawer unit (20) which is fixed at the body (10) and moved by the groove (16) and the projecting longitudinal guide (23), has the function of helping the user to put his shoes in the drawer unit (20); the groove (16) and the projection (23) fix and support the foot rest (30) and the drawer unit (20) so as to prevent them from being moved or separated easily; the perfuming and disinfecting unit (24) of the drawer unit (20) removes bad smells in the drawer unit (20).

## Claims

1. A car floor mat (100) shaped to fit on a car floor to act as a foot rest and for shoe storage, comprising a body (10) having a base and side walls (17);
a drawer unit (20) with a lid (22) and plural partitions (21) for storing a pair of shoes, the drawer unit having projecting longitudinal guides (23) and being freely slideable, with its guides following grooves (16) on the body, lengthwise of the body between a rear end, for storage beneath a car seat, and a front end, for access;
and a removable foot rest (30) having a counterpart (34) fixed beneath it, by which a fixing part (15) on the upper surface of the body supports and settles the foot rest whilst it is supported laterally between the side walls (17).

2. A car floor mat according to claim 1, comprising means (51, 52, 53) for fixing the foot rest to the side walls (17).

3. A car floor mat according to claim 1 or claim 2, comprising fixing means (40) for holding the drawer unit (20) at its rear position.

4. A car floor mat according to claim 2, in which the means for fixing comprises a plurality of fixing holes (51) formed in one side of the foot rest (30) at regular intervals;
a penetrating hole (52) formed through one of the side walls (17) at a position corresponding to one of the fixing holes; and a fixing pin (53) passing through the hole and into the fixing holes for fixing the foot rest.

5. A car floor mat according to claim 3, in which the fixing means (40) for holding the drawer unit comprises a fixing lever (41) for fixing and supporting one side surface of the drawer unit at one of its rotational positions, the fixing lever being mounted on an edge of the side wall (17).

6. A car floor mat according to any preceding claim, comprising a drawer insert (25) for partitioning the interior of the drawer unit and arranging items therein.

7. A car floor mat according to any preceding claim, comprising a perfuming and disinfection unit (24) arranged to be powered from the car power supply.

8. A car floor mat according to any preceding claim, comprising a heater coil (39') provided in an upper inner surface of the foot rest and operable by receiving power from a car power supply, to generate heat for warming the feet.

## Patentansprüche

1. Fahrzeugbodenmatte (100), die so geformt ist, dass sie auf einen Fahrzeugboden passt, um als eine Fußauflage und für die Schuhaufbewahrung zu funktionieren, wobei sie aufweist:
ein Gehäuse (10) mit einer Basis und Seitenwänden (17);
eine Schubfacheinheit (20) mit einem Deckel (22) und mehreren Fächern (21) für das Aufbewahren eines Paares von Schuhen, wobei die Schubfacheinheit vorstehende Längsführungen (23) aufweist und ungehindert verschiebbar ist, wobei ihre Führungen den Nuten (16) am Gehäuse folgen, in Längsrichtung des Gehäuses zwischen einem hinteren Ende, für die Aufbewahrung unterhalb eines Fahrzeugsitzes, und einem vorderen Ende, für einen Zugang;
und eine entfernbare Fußauflage (30) mit einem Gegenstück (34), das unterhalb davon befestigt ist, wobei ein Befestigungsteil (15) auf der oberen Fläche des Gehäuses die Fußauflage trägt und stabilisiert, während sie seitlich zwischen den Seitenwänden (17) getragen wird.

2. Fahrzeugbodenmatte nach Anspruch 1, die eine Einrichtung (51, 52, 53) für das Feststellen der Fußauflage an den Seitenwänden (17) aufweist.

3. Fahrzeugbodenmatte nach Anspruch 1 oder Anspruch 2, die eine Feststelleinrichtung (40) für das Halten der Schubfacheinheit (20) in ihrer hinteren Position aufweist.

4. Fahrzeughodenmatte nach Anspruch 2, bei der die Feststelleinrichtung aufweist:
eine Vielzahl von Befestigungslöchern (51), die in einer Seite der Fußauflage (30) in regelmäßigen Abständen ausgebildet sind;
ein durchdringendes Loch (52), das durch eine der Seitenwände (17) in einer Position ausgebildet wird, die einem der Befestigungslöcher entspricht;
und einen Befestigungsstift (53), der durch das Loch hindurch und in die Befestigungslöcher hinein für das Feststellen der Fußauflage geht.

5. Fahrzeugbodenmatte nach Anspruch 3, bei der die Feststelleinrichtung (40) für das Halten der Schubfacheinheit einen Feststellhebel (41) für das Feststellen und Tragen einer Seitenfläche der Schubfacheinlxeit in einer ihrer Rotationspositionen aufweist, wobei der Feststellhebel an einem Rand der Seitenwand (17) montiert ist.

6. Fahrzeugbodenmatte nach einem der vorhergehenden Ansprüche, die einen Schubfacheinsatz (25) für das Unterteilen des Innenraumes der Schubfacheinheit und das Anordnen der Posten darin aufweist.

7. Fahrzeugbodenmatte nach einem der vorhergehenden Ansprüche, die eine Parfümier- und Desinfektionseinheit (24) aufweist, die so angeordnet ist, dass sie von einer Fahrzeugstromversorgung aus mit Strom versorgt wird.

8. Fahlzeugbodenmatte nach einem der vorhergehenden Ansprüche, die eine Heizspirale (39) aufweist, die in einer oberen inneren Fläche der Fußauflage vorhanden und durch eine Stromaufnahme von einer Fahrzeugstromversorgung funktionsfähig ist, um Wärme für das Erwärmen der Füße zu erzeugen.

## Revendications

1. Tapis de sol pour voiture (100), formé de sorte à pouvoir être ajusté sur un plancher de la voiture, et servir de repose-pieds et de rangement de chaussures, comprenant un corps (10) compostant :
une base et des parois latérales (17) ;
une unité à tiroir (20) avec un couvercle (22) et plusieurs cloisons (21) pour ranger une paire de chaussures, l'unité à tiroir comportant des guides longitudinaux en saillie (23), et pouvant glisser librement, ses guides suivant des rainures (16) sur le corps, dans le sens de la longueur du corps, entre une extrémité arrière, en vue d'un rangement au-dessous d'un siège du véhicule, et une extrémité avant, en vue d'établir un accès ;
et un repose-pieds amovible (30), comportant une contrepartie (34) qui est fixée au-dessous, une partie de fixation (15) sur la surface supérieure du corps pouvant ainsi supporter et ajuster le repose-pieds pendant qu'il est supporté latéralement entre les parois latérales (17).

2. Tapis de sol pour voiture selon la revendication 1, comprenant un moyen (51, 52, 53) pour fixer le repose-pieds sur les parois latérales (17).

3. Tapis de sol pour voiture selon les revendications 1 ou 2, comprenant un moyen de fixation (40) pour retenir l'unité à tiroir (20) au niveau de sa position arrière.

4. Tapis de sol pour voiture selon la revendication 2, dans lequel le moyen de fixation comprend :
plusieurs trous de fixation (51) formés dans un côté du repose-pieds (30), à des intervalles réguliers,
un trou pénétrant (52) formé à travers l'une des parois latérales (17), au niveau d'une position correspondant à l'un des trous de fixation ;
et une goupille de fixation (53) passant à travers le trou et dans les trous de fixation, pour fixer le repose-pieds.

5. Tapis de sol pour voiture selon la revendication 3, dans lequel le moyen de fixation (40) destiné à retenir l'unité à tiroir comprend un levier de fixation (41), pour fixer et supporter une surface latérale de l'unité à tiroir au niveau de l'une de ses positions de rotation, le levier de fixation étant monté sur un bord de la paroi latérale (17).

6. Tapis de sol pour voiture selon l'une quelconque des revendications précédentes, comprenant un insert de tiroir (25) pour cloisonner l'intérieur de l'unité à tiroir et y ranger des articles.

7. Tapis de sol pour voiture selon l'une quelconque des revendications précédentes, comprenant une unité parfumante et désinfectante (24) agencée de sorte à être actionnée à partir de l'alimentation en énergie de la voiture.

8. Tapis de sol pour voiture selon l'une quelconque des revendications précédentes, comprenant un serpentin de chauffage (39) agencé dans une surface interne supérieure du repose-pieds et pouvant être actionné en recevant l'énergie à partir d'une alimentation en énergie de la voiture, pour produire de la chaleur afin de chauffer les pieds.
